# EUROPEAN PATENT APPLICATION

(11) **EP 4 742 571 A1**
(43) Date of publication of application: **13.05.2026**
(21) Application number: 25205527.2
(22) Date of filing: 30.09.2025
(51) Int. Cl.: H04L 1/08

(54) **PDCCH TRANSMISSION REPETITIONS**

(30) Priority: 08.11.2024 WO PCT/CN2024/131133
(71) Applicant: Nokia Technologies Oy, 02610 Espoo (FI)
(72) Inventor: FREDERIKSEN, Frank, Klarup (DK); MARCONE, Alessio, Munich (DE); AHMADZADEH, Arman, Munich (DE); BI, Bo, Hangzhou (CN)
(74) Representative: Nokia EPO representatives

(57) **Abstract**

Example embodiments of the present disclosure provide a solution for physical downlink control channel (PDCCH) transmission repetitions. In an example method, a terminal device receives a configuration for at least one common search space. The terminal device monitors, according to the configuration, at least one PDCCH candidate for decoding downlink control information (DCI). The terminal device determine, based on an indication in association with the at least one PDCCH candidate, that PDCCH transmission repetition is enabled.

## Description

### FIELD

Various example embodiments relate to the field of communication, and in particular, to devices, methods, apparatuses, and a computer readable medium for physical downlink control channel (PDCCH) transmission repetitions.

### BACKGROUND

A communication network can be seen as a facility that enables communications between two or more communication devices, or provides communication devices access to a data network. A mobile or wireless communication network is one example of a communication network.

Such communication networks operate in accordance with standards, such as those promulgated by 3GPP (Third Generation Partnership Project) or ETSI (European Telecommunications Standards Institute). Examples of such standards include the so-called 5G (5th Generation) standard or other standards promulgated by 3GPP.

### SUMMARY

In general, example embodiments of the present disclosure provide a solution for PDCCH transmission repetitions, especially for PDCCH transmission repetition in a non-terrestrial network (NTN).

In a first aspect, there is provided a terminal device. The terminal device comprises at least one processor and at least one memory storing instructions that, when executed by the at least one processor, cause the terminal device at least to: receive, from a network device, a configuration for at least one common search space; monitor, according to the configuration, at least one physical downlink control channel (PDCCH) candidate for decoding downlink control information (DCI); and determine, based on an indication in association with the at least one PDCCH candidate, that PDCCH transmission repetition is enabled.

In a second aspect, there is provided a network device. The network device comprises at least one processor and at least one memory storing instructions that, when executed by the at least one processor, cause the network device at least to: transmit, to a terminal device, a configuration for at least one common search space; and transmit, according to the configuration, at least one physical downlink control channel (PDCCH) candidate for decoding downlink control information (DCI), wherein the at least one PDCCH candidate is in association with an indication for indicating that PDCCH transmission repetition is enabled.

In a third aspect, there is provided a method. The method comprises: receiving, from a network device, a configuration for at least one common search space; monitoring, according to the configuration, at least one physical downlink control channel (PDCCH) candidate for decoding downlink control information (DCI); and determining, based on an indication in association with the at least one PDCCH candidate, that PDCCH transmission repetition is enabled.

In a fourth aspect, there is provided a method. The method comprises: transmitting, to a terminal device, a configuration for at least one common search space; and transmitting, according to the configuration, at least one physical downlink control channel (PDCCH) candidate for decoding downlink control information (DCI), wherein the at least one PDCCH candidate is in association with an indication for indicating that PDCCH transmission repetition is enabled.

In a fifth aspect, there is provided an apparatus. The apparatus comprises: means for receiving, from a network device, a configuration for at least one common search space; means for monitoring, according to the configuration, at least one physical downlink control channel (PDCCH) candidate for decoding downlink control information (DCI); and means for determining, based on an indication in association with the at least one PDCCH candidate, that PDCCH transmission repetition is enabled.

In a sixth aspect, there is provided an apparatus. The apparatus comprises: means for transmitting, to a terminal device, a configuration for at least one common search space; and means for transmitting, according to the configuration, at least one physical downlink control channel (PDCCH) candidate for decoding downlink control information (DCI), wherein the at least one PDCCH candidate is in association with an indication for indicating that PDCCH transmission repetition is enabled.

In a seventh aspect, there is provided a non-transitory computer readable medium comprising program instructions for causing an apparatus to perform at least method of the above third aspect or fourth aspect.

In an eighth aspect, there is provided a computer program comprising instructions, which, when executed by an apparatus, cause the apparatus to perform at least the method of the above third aspect or fourth aspect.

In a ninth aspect, there is provided a terminal device. The terminal device comprises: receiving circuitry configured to receive, from a network device, a configuration for at least one common search space; monitoring circuitry configured to monitor, according to the configuration, at least one physical downlink control channel (PDCCH) candidate for decoding downlink control information (DCI); and determining circuitry configured to determine, based on an indication in association with the at least one PDCCH candidate, that PDCCH transmission repetition is enabled.

In a tenth aspect, there is provided a network device. The network device comprises: first transmitting circuitry configured to transmit, to a terminal device, a configuration for at least one common search space; and second transmitting circuitry configured to transmit, according to the configuration, at least one physical downlink control channel (PDCCH) candidate for decoding downlink control information (DCI), wherein the at least one PDCCH candidate is in association with an indication for indicating that PDCCH transmission repetition is enabled.

It is to be understood that the summary section is not intended to identify key or essential features of embodiments of the present disclosure, nor is it intended to be used to limit the scope of the present disclosure. Other features of the present disclosure will become easily comprehensible through the following description.

### BRIEF DESCRIPTION OF THE DRAWINGS

Some example embodiments will now be described with reference to the accompanying drawings, in which:
FIG. 1 illustrates an example communication environment in which embodiments of the present disclosure may be implemented;
FIG. 2 illustrates an example of a process flow in accordance with some example embodiments of the present disclosure;
FIG. 3 illustrates an example flowchart in accordance with some other embodiments of the present disclosure;
FIG. 4A illustrates an example PDSCH reference timing of the first embodiment in accordance with some example embodiments of the present disclosure;
FIG. 4B illustrates an example PDSCH reference timing of the second embodiment in accordance with some example embodiments of the present disclosure;
FIG. 4C illustrates an example PDSCH reference timing of the third embodiment in accordance with some example embodiments of the present disclosure;
FIG. 5 illustrates a flowchart of an example method implemented at a terminal device in accordance with some other embodiments of the present disclosure;
FIG. 6 illustrates a flowchart of an example method implemented at a network device in accordance with some other embodiments of the present disclosure;
FIG. 7 illustrates a simplified block diagram of a device that is suitable for implementing some example embodiments of the present disclosure; and
FIG. 8 illustrates a block diagram of an example of a computer-readable medium in accordance with some example embodiments of the present disclosure.

Throughout the drawings, the same or similar reference numerals represent the same or similar elements.

### DETAILED DESCRIPTION

Principles of the present disclosure will now be described with reference to some example embodiments. It is to be understood that these embodiments are described only for the purpose of illustration and help those skilled in the art to understand and implement the present disclosure, without suggesting any limitation as to the scope of the disclosure. The disclosure described herein can be implemented in various manners other than the ones described below.

In the following description and claims, unless defined otherwise, all technical and scientific terms used herein have the same meaning as commonly understood by one of ordinary skills in the art to which this disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first" and "second" etc. may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the listed terms.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof. As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (for example, firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "network", "communication network" or "data network" refers to a network following any suitable communication standards, such as long term evolution (LTE), LTE-advanced (LTE-A), wideband code division multiple access (WCDMA), high-speed packet access (HSPA), narrow band Internet of things (NB-IoT), wireless fidelity (Wi-Fi), non-terrestrial network (NTN) and so on. Furthermore, the communications between a terminal device and a network device/element in the communication network may be performed according to any suitable generation communication protocols, including, but not limited to, the fourth generation (4G), 4.5G, the fifth generation (5G), the future sixth generation (6G), IEEE 802.11 communication protocols, and/or any other protocols either currently known or to be developed in the future. Embodiments of the present disclosure may be applied in various communication systems. Given the rapid development in communications, there will of course also be future type communication technologies and systems with which the present disclosure may be embodied. It should not be seen as limiting the scope of the present disclosure to only the aforementioned system.

As used herein, the term "network device" refers to a node in a communication network via which a terminal device receives services (e.g., positioning services) therefrom. The network device may refer to a core network device or access network device, such as base station (BS) or an access point (AP) or a transmission and reception point (TRP), for example, a node B (NodeB or NB), an evolved NodeB (eNodeB or eNB), a NR NB (also referred to as a gNB), a remote radio unit (RRU), a radio header (RH), a remote radio head (RRH), a WiFi device, a relay, a low power node such as a femto, a pico, and so forth, depending on the applied terminology and technology. In the following description, the terms "network device", "AP device", "AP" and "access point" may be used interchangeably.

The term "terminal device" refers to any end device that may be capable of wireless communication. By way of example rather than limitation, a terminal device may also be referred to as a communication device, user equipment (UE), a Subscriber Station (SS), a Portable Subscriber Station, a Mobile Station (MS), a station (STA) or station device, or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (IoT) device, a watch or other wearable, a head-mounted display (HMD), a vehicle, a drone, a medical device and applications (for example, remote surgery), an industrial device and applications (for example, a robot and/or other wireless devices operating in an industrial and/or an automated processing chain contexts), a consumer electronics device, a device operating on commercial and/or industrial wireless networks, and the like. In the following description, the terms "station", "station device", "STA", "terminal device", "communication device", "terminal", "user equipment" and "UE" may be used interchangeably.

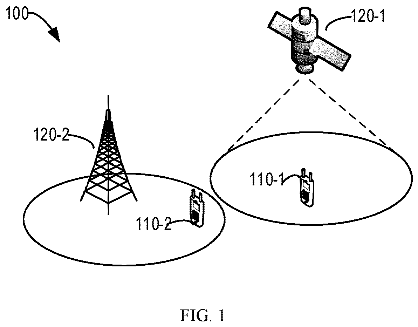

Principles and embodiments of the present disclosure will be described in detail below with reference to the accompanying drawings. Reference is first made to FIG. 1, which illustrates an example communication environment 100 in which embodiments of the present disclosure may be implemented. FIG. 1 illustrates two types of communication networks, including a non-terrestrial network (NTN) and a terrestrial network (TN). In the NTN network, a terminal device 110-1 and a network device 120-1 can communicate with each other. The network device 120-1 in the NTN network may be, for example, a gNB that provides communication coverage through space-borne vehicles (such as satellites). In the TN network, a terminal device 110-2 and a network device 120-2 can communicate with each other. The network device 120-2 in the TN network may be, for example, a gNB that provides communication coverage.

In communication systems, "UL" refers to a communication link in a direction from a terminal device to a network device, and "DL" refers to a communication link in a direction from the network device to the terminal device.

It is to be understood that FIG. 1 is illustrated only for the purpose of illustration without suggesting any limitations. For example, the environment 100 may include any suitable number of network devices and terminal devices adapted for implementing embodiments of the present disclosure.

Communications in the communication environment 100 may be implemented according to any proper communication protocol(s), comprising, but not limited to, cellular communication protocols of the first generation (1G), the second generation (2G), the third generation (3G), the fourth generation (4G), the fifth generation (5G), and the sixth generation (6G) and on the like, wireless local network communication protocols such as Institute for Electrical and Electronics Engineers (IEEE) 802.11 and the like, and/or any other protocols currently known or to be developed in the future. Moreover, the communication may utilize any proper wireless communication technology, comprising but not limited to: Code Division Multiple Access (CDMA), Frequency Division Multiple Access (FDMA), Time Division Multiple Access (TDMA), Frequency Division Duplex (FDD), Time Division Duplex (TDD), Multiple-Input Multiple-Output (MIMO), Orthogonal Frequency Division Multiple (OFDM), Discrete Fourier Transform spread OFDM (DFT-s-OFDM) and/or any other technologies currently known or to be developed in the future.

Physical downlink control channel (PDCCH) for common search space (CSS) (i.e., Type 0, Type 0A, Type 1, and Type 2) is one of the selected channels in downlink (DL) for coverage enhancement. In particular, PDCCH repetitions may be a candidate to be down-selected (due to the inherent back-ward compatibility support) from the list of potential techniques.

The time domain resource assignment may be defined through a default configuration with a downlink scheduling offset *k₀=* 0*.* The time domain resource assignment may also be configured by higher layers, and the scheduling offset *k₀* may have a different value, which is basically configured through the PDSCH-TimeDomainAllocationList Information Element (IE).

The PDSCH-TimeDomainResourceAllocation IE may be used to configure a time domain relation between PDCCH and physical downlink shared channel (PDSCH). The PDSCH-TimeDomainResourceAllocationList IE contains one or more of such PDSCH-TimeDomainResourceAllocation IEs. The network may indicate in the DL assignment that which of the configured time domain allocations the UE may apply for that DL assignment. The UE may determine the bit width of the downlink control information (DCI) field based on the number of entries in the PDSCH-TimeDomainResourceAllocationList IE. Value 0 in the DCI field refers to the first element in this list, and value 1 in the DCI field refers to the second element in this list, and so on.

Generally, it is possible to configure the specific scheduling offset *k₀* on a general level. However, when the scheduling offset *k₀* is configured through system information, the respective value may be static and in general applicable to all scheduling provided through system information radio network temporary identifier (SI-RNTI) (i.e., system information scheduling), group radio network temporary identifier (G-RNTI) (i.e., group scheduling), and/or cell radio network temporary identifier (C-RNTI) having search spaces with or without control resource set (CORESET) 0 associated with it, etc. Hence, configuring *k₀* in this way may have negative impacts to the flexibility of overall downlink scheduling procedures.

Considering PDCCH repetitions as the technique for coverage enhancement of DL control channel, several issues may need to be addressed.

For the first issue, it relates to UE identification of the starting PDCCH monitoring occasion (MO) among the set of MOs during which the PDCCH with repetitions are transmitted. Without knowing this reference and/or starting MO, it would be challenging (even if it is not impossible at all) for NTN UEs supporting the feature of PDCCH repetitions to know how to combine the PDCCH repetitions.

For the second issue, when applying repetitions in the time domain, there may be a need to adjust the perception of the scheduling relations that are applied mainly with respect to the *k₀* that the UE will use when being scheduled by a DCI transmitted via PDCCH in common search space sets.

For the third issue, it relates to providing means and/or indication for NTN UEs supporting the feature of PDCCH repetitions to understand if the network transmits the PDCCH with repetitions or not. This is important since even if the network supports the feature of PDCCH repetitions (i.e., support transmitting the PDCCH with repetitions), it does not mean that the network will always transmit PDCCH with repetitions. In other words, it may need to be clear for the UE that the feature of PDCCH repetitions is enabled or disabled in current use.

Therefore, some embodiments of the present disclosure propose a solution for PDCCH transmission repetition. In this solution, a terminal device receives a configuration for at least one common search space. Also, the terminal device monitors, according to the configuration, at least one PDCCH candidate for decoding DCI. In addition, the terminal device determines, based on an indication in association with the at least one PDCCH candidate, that PDCCH transmission repetition is enabled. By implementing the example embodiments of the present disclosure, a framework that handles the issues as mentioned above is proposed.

For illustrative purposes, principles and example embodiments of the present disclosure will be described below with reference to FIG. 1 to FIG. 8. However, it is to be noted that these embodiments are given to enable the skilled in the art to understand inventive concepts of the present disclosure and implement the solution as proposed herein, and not intended to limit scope of the present application in any way.

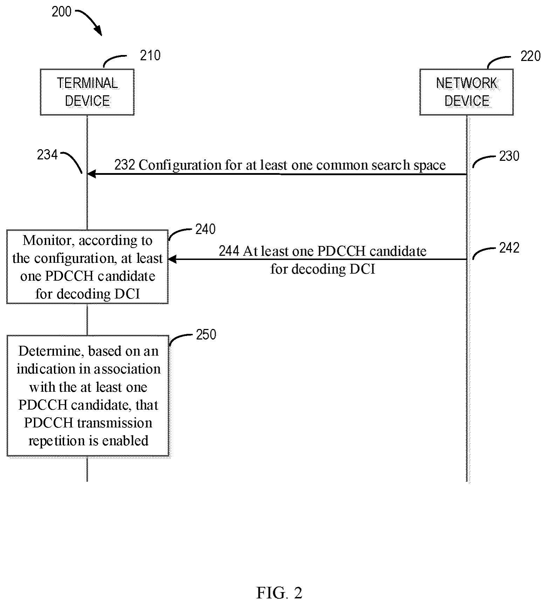

FIG. 2 illustrates an example of a process flow 200 in accordance with some example embodiments of the present disclosure. For ease of understanding, the process flow 200 will be described with reference to FIG. 1. It would be appreciated that although the process flow 200 has been described referring to the communication environment 100 of FIG. 1, this process flow 200 may be likewise applied to other similar communication scenarios.

As shown in FIG. 2, at 230, a network device 220 may transmit, to a terminal device 210, a configuration 232 for at least one common search space. Accordingly, at 234, the terminal device 210 may receive, from the network device 220, the configuration 232 for at least one common search space. Thereafter, at 240, the terminal device 210 may monitor, according to the configuration 232, at least one physical downlink control channel (PDCCH) candidate for decoding DCI. At 242, the network device 220 may transmit, according to the configuration 232, at least one PDCCH candidate 244 for decoding downlink control information (DCI). The at least one PDCCH candidate is in association with an indication for indicating that PDCCH transmission repetition is enabled.

At 244, At 250, the terminal device 210 may determine, based on an indication in association with the at least one PDCCH candidate, that PDCCH transmission repetition is enabled.

In some embodiments, the terminal device 210 may further determine a reference point, and the reference point is used for indicating a starting PDCCH monitoring occasion (MO) among a set of PDCCH MOs during which at least one PDCCH transmission in association with the ongoing PDCCH transmission repetition is transmitted.

In some embodiments, the reference point is relative to a start of the at least one common search space. In some embodiments, the reference point is: a first PDCCH MO in the at least one common search space; a PDCCH MO among even-numbered PDCCH MOs in the at least one common search space; a PDCCH MO among odd-numbered PDCCH MOs in the at least one common search space; a PDCCH MO in every k*p slots, and k is an integer and p is a slot periodicity of the at least one common search space; or any combination thereof.

Alternatively, in some embodiments, the PDCCH transmission repetition is used for scheduling random access response (RAR) or message 4 (MSG4), and the reference point is relative to a start of a RAR window or a start of a contention resolution timer. In some embodiments, the reference point is aligned with the start of the RAR window or the start of the contention resolution timer.

For example, to solve the problem as mentioned in the first issue, and to avoid unambiguous UE behavior, a first solution is introduced. That is, to specify a starting PDCCH MO among the PDCCH MOs during which the PDCCH with repetitions may be transmitted.

In one option of the first solution, the reference point for the starting PDCCH MO is relative to the start of the configured search space. This is in particular useful for common search spaces other than the random access (RA) search space.

For example, the reference point is the first PDCCH MO in the configured search space. Alternatively, for example, the reference point is a PDCCH among even-numbered or odd-numbered PDCCH MOs in the configured search space.

Alternatively, for example, the potential PDCCH MOs are determined by a rule, e.g., a PDCCH MO among the potential PDCCH MOs used for the PDCCH with repetitions is in every integer (k) * the slot periodicity of the search space. In one example, if the slot periodicity of the search space is 4, i.e., the potential PDCCH MOs are in every 4^{th} slot (assuming slot offset of 0 as well), the starting PDCCH MOs are in every k * 4 = 12 slots (e.g., k = 3). In other words, the parameter k determines the granularity of the starting PDCCH MOs where repetition can be started.

In another option of the first solution, the reference point for the starting PDCCH MO is relative to (or aligned with) the start of a random access response (RAR) window or a start of a contention resolution timer. This is in particular useful for the RA search space.

Referring back to FIG. 2, in some embodiments, the terminal device 210 may further determine a scheduling offset between at least one PDCCH transmission in association with the PDCCH transmission repetition and a start of at least one physical downlink shared channel (PDSCH) transmission, wherein one of the following: the at least one PDSCH transmission includes a single PDSCH transmission, and the start of the at least one PDSCH transmission is a slot of the single PDSCH transmission; or the at least one PDSCH transmission includes PDSCH repetitions, and the start of the at least one PDSCH transmission is a first slot of a first PDSCH repetition among the PDSCH repetitions. In some embodiments, the scheduling offset is a slot offset between a last PDCCH transmission in association with the PDCCH transmission repetition and the start of the at least one PDSCH transmission. Alternatively, in some embodiments, the scheduling offset is a slot offset between a first PDCCH transmission in association with the PDCCH transmission repetition and the start of the at least one PDSCH transmission.

Alternatively, in some embodiments, the PDCCH transmission repetition is defined by a bitmap including multiple bits corresponding to multiple PDCCH candidates, and the scheduling offset is a slot offset between a last PDCCH transmission in association with the PDCCH transmission repetition and the start of the at least one PDSCH transmission.

Alternatively, in some embodiments, the PDCCH transmission repetition is determined at least based on a first search space set and a second search space set among sets of the at least one common search space, and the scheduling offset is a slot offset between (i) a minimum of a PDCCH transmission in association with the PDCCH transmission repetition in the first search space set and a PDCCH transmission in association with the PDCCH transmission repetition in the second search space set, and (ii) the start of the at least one PDSCH transmission.

Alternatively, in some embodiments, the PDCCH transmission repetition is determined at least based on a first search space set and a second search space set among sets of the at least one common search space, and the scheduling offset is a slot offset between (i) a slot during which a PDCCH transmission in association with the PDCCH transmission repetition in the first search space set is transmitted, and (ii) the start of the at least one PDSCH transmission.

For example, to solve the problem as mentioned in the second issue, a second solution is introduced.

Generally, there may be two UE capabilities need to be distinguished with regard to the combining of PDCCH repetitions. In particular, on the one hand, it is assumed that a UE with Type 1 capability first stores all (potential) PDCCH repetitions and subsequently attempts to decode the corresponding PDCCH with repetitions. On the other hand, a UE with Type 2 capability progressively attempts to decode the corresponding PDCCH with repetitions. For instance, if PDCCH with four repetitions is configured, on the one hand, the UE with Type 1 capability may first receive and identify the four PDCCH repetition candidates, and then attempts to decode them. On the other hand, the UE with Type 2 capability may first attempt to decode the PDCCH based on a (first) two repetitions, and if the decoding fails, it may proceed with decoding the PDCCH based on a (first) three repetitions. Therefore, it can be seen that, for the UE with Type 2 capability, not all configured PDCCH repetitions may be needed.

In the first option of the second solution, the UE with repetition capability may interpret the value of *k₀* from the last symbol of the last PDCCH repetition among a set of PDCCH repetitions in time domain. It is suitable for the UE with Type 1 capability, while also applicable to the UE with Type 2 capability. It also has the advantage that the current value range of *k₀* may not need to be extended.

In the second option of the second solution, the UE with repetition capability may interpret the value of *k₀* from the last symbol of the first PDCCH repetition among a set of PDCCH repetitions in time domain. It is suitable for the UE with Type 2 capability. To account for the number of configured PDCCH repetitions, the value range of *k₀* may need to be extended.

In the third option of the second solution, if the PDCCH repetitions are configured by a parameter of a bitmap, where the number of PDCCH repetitions is determined based on a pre-determined value of the bitmap and (potential) PDCCH candidates are determined based on the locations of the pre-determined value of the bitmap, the UE with repetition capability may interpret the value of *k₀* from the last symbol of the last PDCCH candidate that is associated with the location of the last pre-determined value in the parameter of the bitmap.

In one example implementation of this option, the PDCCH repetitions are configured by a parameter of a bitmap, where the number of PDCCH repetitions is determined by the number of "1"s, and the PDCCH monitoring occasions are determined by the location(s) of "1"s in the bitmap. Here, the UE may interpret *k₀* with reference to the last value of "1" in the bitmap. This option and its example implementation have the advantage that both UEs with Type 1 and Type 2 capabilities can be instructed similarly.

In the fourth option of the second solution, if the PDCCH repetitions are determined based on at least two linked search space sets (i.e., an original search space set and an additional search space set), the UE with repetition capability may interpret the value of *k₀* with reference to the minimum of the last symbol of the PDCCH repetition in the original search space set and the last symbol of the PDCCH repetition in the additional search space set.

In one example implementation of this option, a UE is configured with two PDCCH repetitions, the first PDCCH repetition is carried in the original search space set within slot *i* and last symbol *j*. The second PDCCH repetition is carried in the additional search space set within slot *i* and last symbol *p.* In this case, *k₀* may be interpreted with reference to the minimum of *j* and *p* (i.e., min(j,p)).

In the fifth option of the second solution, if the PDCCH repetitions are determined based on at least two linked search space sets (i.e., an original search space set and an additional search space set), the UE with repetition capability may interpret the value of *k₀* with reference to a slot where it contains PDCCH in the original search space.

In one example, a UE is configured with two PDCCH repetitions, the first PDCCH repetition is carried in the original search space set within slot *i*. The second repetition is carried in the additional search space set within slot *j*. In this case, *k₀* may be interpreted with reference to the original search space set within slot *i*. Even Type 2 UE doesn't decode the first PDCCH repetition carried in the original search space set but the second PDCCH repetition carried in the additional search space set, the reference slot is still the slot number for the original search space set which can be derived from the slot number of the decoded PDCCH repetitions.

Referring back to FIG. 2, in some embodiments, the indication is a flag conveyed by at least one bit in the DCI, or alternatively, time-frequency characteristics of the at least one PDCCH candidate, or any combination thereof.

For example, to solve the problem as mentioned in the third issue, a third solution is introduced.

That is, to solve the problem of the third issue, as the network may not transmit PDCCH with repetitions even if the feature is enabled, i.e., the network may determine to apply PDCCH repetitions according to system resource or channel condition, it proposes to introduce a new flag/bit in the DCI carried by PDCCH transmitted in a common search space (CSS), where the flag indicates if the transmitted PDCCH is with or without repetitions.

In one option of the third solution, the indication may be conveyed explicitly by introducing a new flag/bit in the DCI carried by PDCCH transmitted in the CSS. In the following, some examples of UE behavior are discussed.

In one example, a UE detects a single PDCCH and read the bit. If the bit is '1', this means that the PDSCH reference timing can consider that PDCCH repetition is applied. Therefore, for the PDSCH reference timing, *k₀* may be interpreted based on the first solution as discussed for the first issue. Otherwise, the transmission of the PDCCH may be considered as a single PDCCH without repetition.

In another example, a UE fails to detect a single PDCCH and continues to detect the PDCCH, in case of detecting successfully with the second PDCCH. If the bit is '1', this means that the PDSCH reference timing can consider that PDCCH repetition is applied. For example, for the PDSCH reference timing, *k₀* may be interpreted based on the first solution as discussed for the first issue. Otherwise, the transmission of the PDCCH may be considered as a single PDCCH.

In yet another example, a UE fail to detect a first PDCCH and subsequent repetitions, then the UE may combine the repetitions and thus decode successfully. In this case, the new bit is assumed as 'repetition applied', that is, the network may set it to '1'. For example, for the PDSCH reference timing, *k₀* may be interpreted based on the first solution as discussed for the first issue.

In another option of the third solution, the indication may be conveyed implicitly via the time-frequency characteristics of the transmitted PDCCH in the CSS.

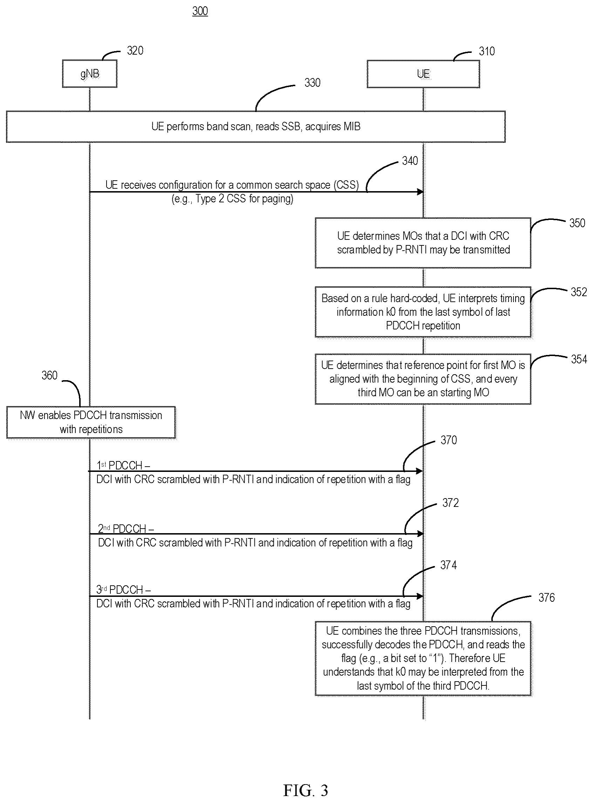

FIG. 3 illustrates an example flowchart in accordance with some other embodiments of the present disclosure.

At 330, the UE 310 may perform band scan, reads synchronization signal block (SSB), and acquires master information block (MIB).

At 340, the UE 310 may receive configuration for a common search space (CSS) (e.g., Type 2 CSS for paging).

At 350, the UE 310 may determine MOs that a DCI with cyclic redundancy check (CRC) scrambled by P-RNTI may be transmitted.

At 352, based on a rule pre-defined, the UE 310 may interpret timing information *k₀* from the last symbol of last PDCCH repetition.

At 354, the UE 310 may determine that reference point for first MO is aligned with the beginning of CSS, and every third MO can be a starting MO.

At 360, the network (e.g., the gNB 320) may enables PDCCH transmission with repetitions.

At 370, 372, and 374, the gNB 320 may transmit the first, the second, and the third PDCCH, where each of the PDCCHs may carry DCI with CRC scrambled with P-RNTI and an indication of repetition with a flag.

At 376, the UE 310 may combine the three PDCCH transmissions, successfully decode the PDCCH, and read the flag (e.g., a bit set to "1"). Therefore, the UE may understand that *k₀* may be interpreted from the last symbol of the third PDCCH.

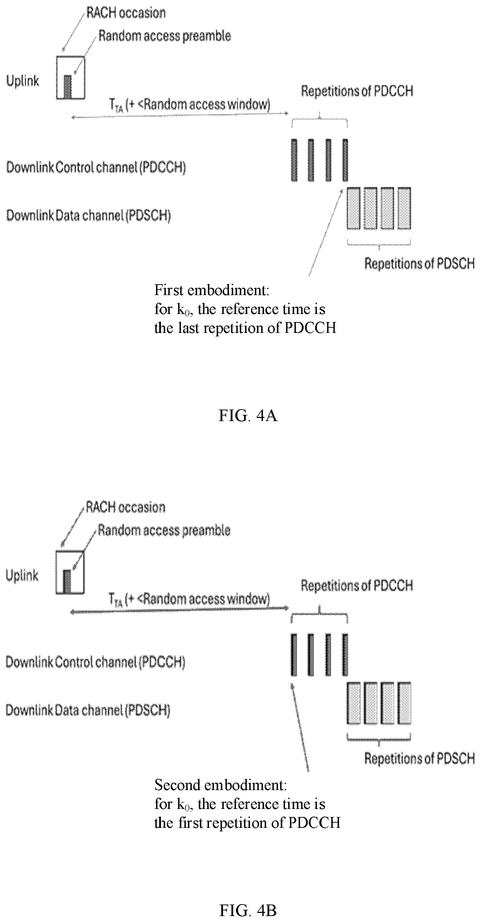

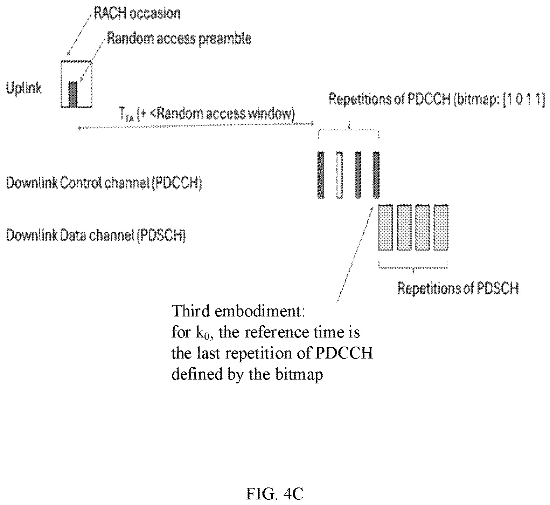

FIG. 4A illustrates an example PDSCH reference timing of the first embodiment in accordance with some example embodiments of the present disclosure, FIG. 4B illustrates an example PDSCH reference timing of the second embodiment in accordance with some example embodiments of the present disclosure, and FIG. 4C illustrates an example PDSCH reference timing of the third embodiment in accordance with some example embodiments of the present disclosure.

As illustrated in FIG. 4A, the PDCCH of DCI format 1_0 with CRC scrambled by RA-RNTI may transmit with 4 repetitions, the PDSCH reference timing in association with *k₀* is based on the last repetition. As illustrated in FIG. 4B, the PDCCH of DCI format 1_0 with CRC scrambled by RA-RNTI may transmit with 4 repetitions, the PDSCH reference timing in association with *k₀* is based on the first repetition.

Moreover, as illustrated in FIG. 4C, the PDCCH of DCI format 1_0 with CRC scrambled by RA-RNTI may transmit with 3 repetitions, the PDSCH reference timing in association with *k₀* is based on the last repetition. In FIG. 4C, the PDCCH repetitions are configured by a parameter of a bitmap (bitmap: [1 0 1 1]), where the number of PDCCH repetitions is determined by the number of "1"s, and the PDCCH monitoring occasions are determined by the location(s) of "1"s in the bitmap.

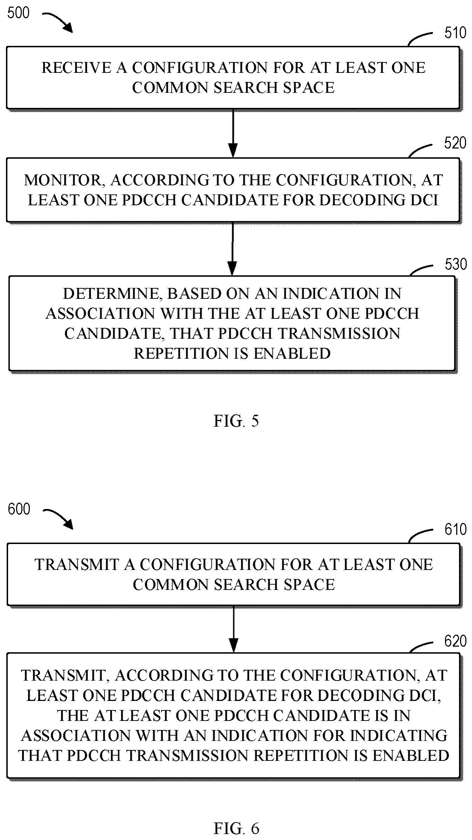

FIG. 5 illustrates a flowchart of an example method 500 implemented at a terminal device in accordance with some other embodiments of the present disclosure. For ease of understanding, the method 500 will be described from the perspective of the terminal device 210 with reference to FIG. 2.

At block 510, the terminal device may receive a configuration for at least one common search space. At block 520, the terminal device may monitor, according to the configuration, at least one PDCCH candidate for decoding DCI. At block 530, the terminal device may determine, based on an indication in association with the at least one PDCCH candidate, that PDCCH transmission repetition is enabled.

In some embodiments, the terminal device may further determine a reference point, and the reference point is used for indicating a starting PDCCH monitoring occasion (MO) among a set of PDCCH MOs during which at least one PDCCH transmission in association with the ongoing PDCCH transmission repetition is transmitted.

In some embodiments, the reference point is relative to a start of the at least one common search space. In some embodiments, the reference point is: a first PDCCH MO in the at least one common search space; a PDCCH MO among even-numbered PDCCH MOs in the at least one common search space; a PDCCH MO among odd-numbered PDCCH MOs in the at least one common search space; a PDCCH MO in every k*p slots, and k is an integer and p is a slot periodicity of the at least one common search space; or any combination thereof.

Alternatively, in some embodiments, the PDCCH transmission repetition is used for scheduling random access response (RAR) or message 4 (MSG4), and the reference point is relative to a start of a RAR window or a start of a contention resolution timer. In some embodiments, the reference point is aligned with the start of the RAR window or the start of the contention resolution timer.

In some embodiments, the terminal device may further determine a scheduling offset between at least one PDCCH transmission in association with the PDCCH transmission repetition and a start of at least one physical downlink shared channel (PDSCH) transmission, wherein one of the following: the at least one PDSCH transmission includes a single PDSCH transmission, and the start of the at least one PDSCH transmission is a slot of the single PDSCH transmission; or the at least one PDSCH transmission includes PDSCH repetitions, and the start of the at least one PDSCH transmission is a first slot of a first PDSCH repetition among the PDSCH repetitions. In some embodiments, the scheduling offset is a slot offset between a last PDCCH transmission in association with the PDCCH transmission repetition and the start of the at least one PDSCH transmission. Alternatively, in some embodiments, the scheduling offset is a slot offset between a first PDCCH transmission in association with the PDCCH transmission repetition and the start of the at least one PDSCH transmission.

Alternatively, in some embodiments, the PDCCH transmission repetition is defined by a bitmap including multiple bits corresponding to multiple PDCCH candidates, and the scheduling offset is a slot offset between a last PDCCH transmission in association with the PDCCH transmission repetition and the start of the at least one PDSCH transmission.

Alternatively, in some embodiments, the PDCCH transmission repetition is determined at least based on a first search space set and a second search space set among sets of the at least one common search space, and the scheduling offset is a slot offset between the following: a slot that contains a minimum of a last symbol of a PDCCH transmission in association with the PDCCH transmission repetition in the first search space set and a last symbol of a PDCCH transmission in association with the PDCCH transmission repetition in the second search space set, and the start of the at least one PDSCH transmission.

Alternatively, in some embodiments, the PDCCH transmission repetition is determined at least based on a first search space set and a second search space set among sets of the at least one common search space, and the scheduling offset is a slot offset between the following: a slot during which a PDCCH transmission in association with the PDCCH transmission repetition in the first search space set is transmitted, and the start of the at least one PDSCH transmission.

In some embodiments, the indication is the following: a flag conveyed by at least one bit in the DCI; time-frequency characteristics of the at least one PDCCH candidate; or any combination thereof.

FIG. 6 illustrates a flowchart of an example method 600 implemented at a network device in accordance with some other embodiments of the present disclosure. For ease of understanding, the method 600 will be described from the perspective of the network device 220 with reference to FIG. 2.

At block 610, the network device may transmit a configuration for at least one common search space. At block 620, the network device may transmit, according to the configuration, at least one physical downlink control channel (PDCCH) candidate for decoding downlink control information (DCI), wherein the at least one PDCCH candidate is in association with an indication for indicating that PDCCH transmission repetition is enabled.

In some embodiments, the network device may further transmit a scheduling offset between at least one PDCCH transmission in association with the PDCCH transmission repetition and a start of at least one physical downlink shared channel (PDSCH) transmission, wherein one of the following: the at least one PDSCH transmission includes a single PDSCH transmission, and the start of the at least one PDSCH transmission is a slot of the single PDSCH transmission; or the at least one PDSCH transmission includes PDSCH repetitions, and the start of the at least one PDSCH transmission is a first slot of a first PDSCH repetition among the PDSCH repetitions. In some embodiments, the scheduling offset is a slot offset between a last PDCCH transmission in association with the PDCCH transmission repetition and the start of the at least one PDSCH transmission. Alternatively, in some embodiments, the scheduling offset is a slot offset between a first PDCCH transmission in association with the PDCCH transmission repetition and the start of the at least one PDSCH transmission.

Alternatively, in some embodiments, the PDCCH transmission repetition is defined by a bitmap including multiple bits corresponding to multiple PDCCH candidates, and the scheduling offset is a slot offset between a last PDCCH transmission in association with the PDCCH transmission repetition and the start of the at least one PDSCH transmission.

Alternatively, in some embodiments, the PDCCH transmission repetition is determined at least based on a first search space set and a second search space set among sets of the at least one common search space, and the scheduling offset is a slot offset between the following: a slot that contains a minimum of a last symbol of a PDCCH transmission in association with the PDCCH transmission repetition in the first search space set and a last symbol of a PDCCH transmission in association with the PDCCH transmission repetition in the second search space set, and the start of the at least one PDSCH transmission.

Alternatively, in some embodiments, the PDCCH transmission repetition is determined at least based on a first search space set and a second search space set among sets of the at least one common search space, and the scheduling offset is a slot offset between the following: a slot during which a PDCCH transmission in association with the PDCCH transmission repetition in the first search space set is transmitted, and the start of the at least one PDSCH transmission.

In some embodiments, the indication is the following: a flag conveyed by at least one bit in the DCI; time-frequency characteristics of the at least one PDCCH candidate; or any combination thereof.

In some embodiments, an apparatus capable of performing any of the method 500 (for example, the terminal device 210) may comprise means for performing the respective steps of the method 500. The means may be implemented in any suitable form. For example, the means may be implemented in a circuitry or software module.

In some embodiments, the apparatus comprises means for receiving, from a network device, a configuration for at least one common search space; means for monitoring, according to the configuration, at least one physical downlink control channel (PDCCH) candidate for decoding downlink control information (DCI); and means for determining, based on an indication in association with the at least one PDCCH candidate, that PDCCH transmission repetition is enabled.

In some embodiments, the apparatus may further comprises means for determining a reference point, and the reference point is used for indicating a starting PDCCH monitoring occasion (MO) among a set of PDCCH MOs during which at least one PDCCH transmission in association with the ongoing PDCCH transmission repetition is transmitted.

In some embodiments, the reference point is relative to a start of the at least one common search space. In some embodiments, the reference point is: a first PDCCH MO in the at least one common search space; a PDCCH MO among even-numbered PDCCH MOs in the at least one common search space; a PDCCH MO among odd-numbered PDCCH MOs in the at least one common search space; a PDCCH MO in every k*p slots, and k is an integer and p is a slot periodicity of the at least one common search space; or any combination thereof.

Alternatively, in some embodiments, the PDCCH transmission repetition is used for scheduling random access response (RAR) or message 4 (MSG4), and the reference point is relative to a start of a RAR window or a start of a contention resolution timer. In some embodiments, the reference point is aligned with the start of the RAR window or the start of the contention resolution timer.

In some embodiments, the terminal device may further comprise means for determining a scheduling offset between at least one PDCCH transmission in association with the PDCCH transmission repetition and a start of at least one physical downlink shared channel (PDSCH) transmission, wherein one of the following: the at least one PDSCH transmission includes a single PDSCH transmission, and the start of the at least one PDSCH transmission is a slot of the single PDSCH transmission; or the at least one PDSCH transmission includes PDSCH repetitions, and the start of the at least one PDSCH transmission is a first slot of a first PDSCH repetition among the PDSCH repetitions. In some embodiments, the scheduling offset is a slot offset between a last PDCCH transmission in association with the PDCCH transmission repetition and the start of the at least one PDSCH transmission. Alternatively, in some embodiments, the scheduling offset is a slot offset between a first PDCCH transmission in association with the PDCCH transmission repetition and the start of the at least one PDSCH transmission.

Alternatively, in some embodiments, the PDCCH transmission repetition is defined by a bitmap including multiple bits corresponding to multiple PDCCH candidates, and the scheduling offset is a slot offset between a last PDCCH transmission in association with the PDCCH transmission repetition and the start of the at least one PDSCH transmission.

Alternatively, in some embodiments, the PDCCH transmission repetition is determined at least based on a first search space set and a second search space set among sets of the at least one common search space, and the scheduling offset is a slot offset between the following: a minimum of a PDCCH transmission in association with the PDCCH transmission repetition in the first search space set and a PDCCH transmission in association with the PDCCH transmission repetition in the second search space set, and the start of the at least one PDSCH transmission.

Alternatively, in some embodiments, the PDCCH transmission repetition is determined at least based on a first search space set and a second search space set among sets of the at least one common search space, and the scheduling offset is a slot offset between the following: a slot during which a PDCCH transmission in association with the PDCCH transmission repetition in the first search space set is transmitted, and the start of the at least one PDSCH transmission.

In some embodiments, the indication is the following: a flag conveyed by at least one bit in the DCI; time-frequency characteristics of the at least one PDCCH candidate; or any combination thereof.

In some embodiments, the apparatus further comprises means for performing other steps in some embodiments of the method 500. In some embodiments, the means comprises at least one processor and at least one memory including computer program code, the at least one memory and computer program code configured to, with the at least one processor, cause the performance of the apparatus.

In some embodiments, an apparatus capable of performing any of the method 600 (for example, the network device 220) may comprise means for performing the respective steps of the method 600. The means may be implemented in any suitable form. For example, the means may be implemented in a circuitry or software module.

In some embodiments, the apparatus comprises means for transmitting, to a terminal device, a configuration for at least one common search space; and means for transmitting, according to the configuration, at least one physical downlink control channel (PDCCH) candidate for decoding downlink control information (DCI), wherein the at least one PDCCH candidate is in association with an indication for indicating that PDCCH transmission repetition is enabled.

In some embodiments, the network device may further comprise means for transmitting a scheduling offset between at least one PDCCH transmission in association with the PDCCH transmission repetition and a start of at least one physical downlink shared channel (PDSCH) transmission, wherein one of the following: the at least one PDSCH transmission includes a single PDSCH transmission, and the start of the at least one PDSCH transmission is a slot of the single PDSCH transmission; or the at least one PDSCH transmission includes PDSCH repetitions, and the start of the at least one PDSCH transmission is a first slot of a first PDSCH repetition among the PDSCH repetitions. In some embodiments, the scheduling offset is a slot offset between a last PDCCH transmission in association with the PDCCH transmission repetition and the start of the at least one PDSCH transmission. Alternatively, in some embodiments, the scheduling offset is a slot offset between a first PDCCH transmission in association with the PDCCH transmission repetition and the start of the at least one PDSCH transmission.

Alternatively, in some embodiments, the PDCCH transmission repetition is defined by a bitmap including multiple bits corresponding to multiple PDCCH candidates, and the scheduling offset is a slot offset between a last PDCCH transmission in association with the PDCCH transmission repetition and the start of the at least one PDSCH transmission.

Alternatively, in some embodiments, the PDCCH transmission repetition is determined at least based on a first search space set and a second search space set among sets of the at least one common search space, and the scheduling offset is a slot offset between the following: a slot that contains a minimum of a last symbol of a PDCCH transmission in association with the PDCCH transmission repetition in the first search space set and a last symbol of a PDCCH transmission in association with the PDCCH transmission repetition in the second search space set, and the start of the at least one PDSCH transmission.

Alternatively, in some embodiments, the PDCCH transmission repetition is determined at least based on a first search space set and a second search space set among sets of the at least one common search space, and the scheduling offset is a slot offset between the following: a slot during which a PDCCH transmission in association with the PDCCH transmission repetition in the first search space set is transmitted, and the start of the at least one PDSCH transmission.

In some embodiments, the indication is the following: a flag conveyed by at least one bit in the DCI; time-frequency characteristics of the at least one PDCCH candidate; or any combination thereof.

In some embodiments, the apparatus further comprises means for performing other steps in some embodiments of the method 600. In some embodiments, the means comprises at least one processor; and at least one memory including computer program code, the at least one memory and computer program code configured to, with the at least one processor, cause the performance of the apparatus.

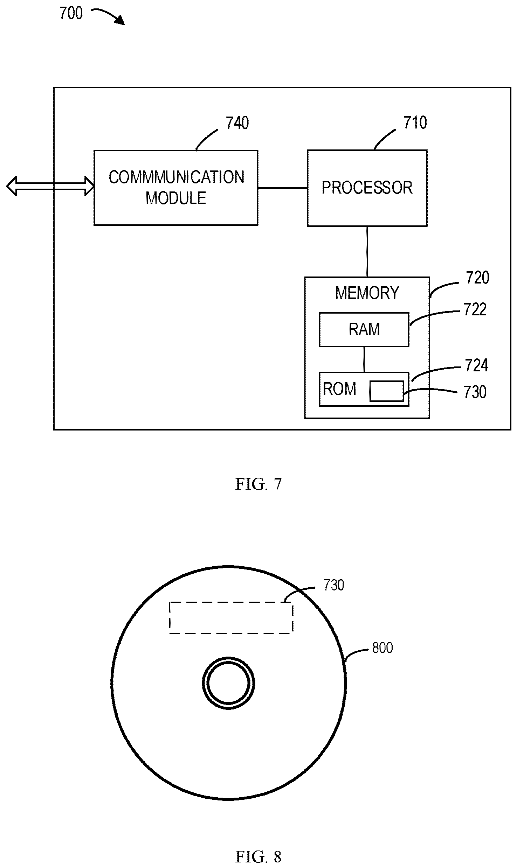

FIG. 7 illustrates a simplified block diagram of a device 700 that is suitable for implementing some example embodiments of the present disclosure. The device 700 may be provided to implement a communication device, for example, the terminal device 210 or the network device 220 as shown in FIG. 2. As shown, the device 700 includes one or more processors 710, one or more memories 720 coupled to the processor 710, and one or more communication modules 740 coupled to the processor 710.

The communication module 740 is for bidirectional communications. The communication module 740 has at least one antenna to facilitate communication. The communication interface may represent any interface that is necessary for communication with other network elements.

The processor 710 may be of any type suitable to the local technical network and may include one or more of the following: general purpose computers, special purpose computers, microprocessors, digital signal processors (DSPs) and processors based on multicore processor architecture, as non-limiting examples. The device 700 may have multiple processors, such as an application specific integrated circuit chip that is slaved in time to a clock which synchronizes the main processor.

The memory 720 may include one or more non-volatile memories and one or more volatile memories. Examples of the non-volatile memories include, but are not limited to, a Read Only Memory (ROM) 724, an electrically programmable read only memory (EPROM), a flash memory, a hard disk, a compact disc (CD), a digital video disk (DVD), and other magnetic storage and/or optical storage. Examples of the volatile memories include, but are not limited to, a random access memory (RAM) 722 and other volatile memories that will not last in the power-down duration.

A computer program 730 includes computer executable instructions that are executed by the associated processor 710. The program 730 may be stored in the ROM 724. The processor 710 may perform any suitable actions and processing by loading the program 730 into the RAM 722.

The embodiments of the present disclosure may be implemented by means of the program 730 so that the device 700 may perform any process of the disclosure as discussed with reference to FIGS. 5 and 6. The embodiments of the present disclosure may also be implemented by hardware or by a combination of software and hardware.

In some example embodiments, the program 730 may be tangibly contained in a computer-readable medium which may be included in the device 700 (such as in the memory 720) or other storage devices that are accessible by the device 700. The device 700 may load the program 730 from the computer-readable medium to the RAM 722 for execution. The computer-readable medium may include any types of tangible non-volatile storage, such as ROM, EPROM, a flash memory, a hard disk, CD, DVD, and the like.

FIG. 8 illustrates a block diagram of an example of a computer-readable medium 1000 in accordance with some example embodiments of the present disclosure. The computer-readable medium 800 has the program 730 stored thereon. It is noted that although the computer-readable medium 800 is depicted in form of CD or DVD in FIG. 8, the computer-readable medium 800 may be in any other form suitable for carry or hold the program 730.

Generally, various embodiments of the present disclosure may be implemented in hardware or special purpose circuits, software, logic or any combination thereof. Some aspects may be implemented in hardware, while other aspects may be implemented in firmware or software which may be executed by a controller, microprocessor or other computing device. While various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

The present disclosure also provides at least one computer program product tangibly stored on a non-transitory computer-readable storage medium. The computer program product includes computer-executable instructions, such as those included in program modules, being executed in a device on a target real or virtual processor, to carry out the method 500 or 600 as described above with reference to FIG. 5 or 6. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. These program codes may be provided to a processor or controller of a general purpose computer, special purpose computer, or other programmable data processing apparatus, such that the program codes, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program codes or related data may be carried by any suitable carrier to enable the device, apparatus or processor to perform various processes and operations as described above. Examples of the carrier include a signal, computer-readable medium, and the like.

The computer-readable medium may be a computer-readable signal medium or a computer-readable storage medium. A computer-readable medium may include but not limited to an electronic, magnetic, optical, electromagnetic, infrared, or semiconductor system, apparatus, or device, or any suitable combination of the foregoing. More specific examples of the computer-readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. The term "non-transitory," as used herein, is a limitation of the medium itself (i.e., tangible, not a signal) as opposed to a limitation on data storage persistency (e.g., RAM vs. ROM).

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the present disclosure, but rather as descriptions of features that may be specific to particular embodiments. Certain features that are described in the context of separate embodiments may also be implemented in combination in a single embodiment. Conversely, various features that are described in the context of a single embodiment may also be implemented in multiple embodiments separately or in any suitable sub-combination.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

## Claims

1. A terminal device comprising:
at least one processor; and
at least one memory storing instructions that, when executed by the at least one processor, cause the terminal device at least to:
receive, from a network device, a configuration for at least one common search space;
monitor, according to the configuration, at least one physical downlink control channel (PDCCH) candidate for decoding downlink control information (DCI); and
determine, based on an indication in association with the at least one PDCCH candidate, that PDCCH transmission repetition is enabled.

2. The terminal device of claim 1, wherein the terminal device is further caused to:
determine a reference point, wherein the reference point is used for indicating a starting PDCCH monitoring occasion (MO) among a set of PDCCH MOs during which at least one PDCCH transmission in association with the ongoing PDCCH transmission repetition is transmitted.

3. The terminal device of claim 2, wherein the reference point is relative to a start of the at least one common search space.

4. The terminal device of claim 3, wherein the reference point is at least one of the following:
a first PDCCH MO in the at least one common search space;
a PDCCH MO among even-numbered PDCCH MOs in the at least one common search space;
a PDCCH MO among odd-numbered PDCCH MOs in the at least one common search space; or
a PDCCH MO in every k*p slots, wherein k is an integer and p is a slot periodicity of the at least one common search space.

5. The terminal device of claim 2, wherein the PDCCH transmission repetition is used for scheduling random access response (RAR) or message 4 (MSG4), and the reference point is relative to a start of a RAR window or a start of a contention resolution timer.

6. The terminal device of claim 5, wherein the reference point is aligned with the start of the RAR window or the start of the contention resolution timer.

7. The terminal device of claim 1, wherein the terminal device is further caused to:
determine a scheduling offset between at least one PDCCH transmission in association with the PDCCH transmission repetition and a start of at least one physical downlink shared channel (PDSCH) transmission, wherein one of the following:
the at least one PDSCH transmission includes a single PDSCH transmission, and the start of the at least one PDSCH transmission is a slot of the single PDSCH transmission; or
the at least one PDSCH transmission includes PDSCH repetitions, and the start of the at least one PDSCH transmission is a first slot of a first PDSCH repetition among the PDSCH repetitions.

8. The terminal device of claim 7, wherein the scheduling offset is a slot offset between a last PDCCH transmission in association with the PDCCH transmission repetition and the start of the at least one PDSCH transmission.

9. The terminal device of claim 7, wherein the scheduling offset is a slot offset between a first PDCCH transmission in association with the PDCCH transmission repetition and the start of the at least one PDSCH transmission.

10. The terminal device of claim 7, wherein the PDCCH transmission repetition is defined by a bitmap including multiple bits corresponding to multiple PDCCH candidates, and the scheduling offset is a slot offset between a slot that contains a last symbol of a last PDCCH transmission in association with the PDCCH transmission repetition and the start of the at least one PDSCH transmission.

11. The terminal device of claim 7, wherein the PDCCH transmission repetition is determined at least based on a first search space set and a second search space set among sets of the at least one common search space, and the scheduling offset is a slot offset between the following:
a slot that contains a minimum of a last symbol of a PDCCH transmission in association with the PDCCH transmission repetition in the first search space set and a last symbol of a PDCCH transmission in association with the PDCCH transmission repetition in the second search space set, and
the start of the at least one PDSCH transmission.

12. The terminal device of claim 7, wherein the PDCCH transmission repetition is determined at least based on a first search space set and a second search space set among sets of the at least one common search space, and the scheduling offset is a slot offset between the following:
a slot during which a PDCCH transmission in association with the PDCCH transmission repetition in the first search space set is transmitted, and
the start of the at least one PDSCH transmission.

13. The terminal device of any of claims 1-12, wherein the indication is at least one of the following:
a flag conveyed by at least one bit in the DCI; or
time-frequency characteristics of the at least one PDCCH candidate.

14. A network device comprising:
at least one processor; and
at least one memory storing instructions that, when executed by the at least one processor, cause the terminal device at least to:
transmit, to a terminal device, a configuration for at least one common search space; and
transmit, according to the configuration, at least one physical downlink control channel (PDCCH) candidate for decoding downlink control information (DCI), wherein the at least one PDCCH candidate is in association with an indication for indicating that PDCCH transmission repetition is enabled.

15. The network device of claim 14, wherein the network device is further caused to:
transmit a scheduling offset between at least one PDCCH transmission in association with the PDCCH transmission repetition and a start of at least one physical downlink shared channel (PDSCH) transmission, wherein one of the following:
the at least one PDSCH transmission includes a single PDSCH transmission, and the start of the at least one PDSCH transmission is a slot of the single PDSCH transmission; or
the at least one PDSCH transmission includes PDSCH repetitions, and the start of the at least one PDSCH transmission is a first slot of a first PDSCH repetition among the PDSCH repetitions.

16. The network device of claim 15, wherein the scheduling offset is a slot offset between a last PDCCH transmission in association with the PDCCH transmission repetition and the start of the at least one PDSCH transmission.

17. The network device of claim 15, wherein the scheduling offset is a slot offset between a first PDCCH transmission in association with the PDCCH transmission repetition and the start of the at least one PDSCH transmission.

18. The network device of claim 15, wherein the PDCCH transmission repetition is defined by a bitmap including multiple bits corresponding to multiple PDCCH candidates, and the scheduling offset is a slot offset between a last PDCCH transmission in association with the PDCCH transmission repetition and the start of the at least one PDSCH transmission.

19. The network device of claim 15, wherein the PDCCH transmission repetition is determined at least based on a first search space set and a second search space set among sets of the at least one common search space, and the scheduling offset is a slot offset between the following:
a slot that contains a minimum of a last symbol of a PDCCH transmission in association with the PDCCH transmission repetition in the first search space set and a last symbol of a PDCCH transmission in association with the PDCCH transmission repetition in the second search space set, and
the start of the at least one PDSCH transmission.

20. The network device of claim 15, wherein the PDCCH transmission repetition is determined at least based on a first search space set and a second search space set among sets of the at least one common search space, and the scheduling offset is a slot offset between the following:
a slot during which a PDCCH transmission in association with the PDCCH transmission repetition in the first search space set is transmitted, and
the start of the at least one PDSCH transmission.

21. The network device of any of claims 14-20, wherein the indication is conveyed through at least one of the following:
a flag conveyed by at least one bit in the DCI; or
time-frequency characteristics of the at least one PDCCH candidate.
